# EUROPÄISCHE PATENTSCHRIFT

(11) **EP 1 882 574 B1**
(45) Veröffentlichungstag und Bekanntmachung des Hinweises auf die Patenterteilung: **09.06.2010**
(21) Anmeldenummer: 07014080.1
(22) Anmeldetag: 18.07.2007
(51) Int. Cl.: B29C 45/14

(54) **Spritzgießanordnung und Verfahren zum Anspritzen eines Formteils und Verwendung einer Spritzgießanordnung**
Injection moulding and method for injecting a moulded part and use of an injection moulding assembly
Agencement de moulage par injection et procédé destiné à injecter une pièce de formage et utilisation d'un agencement de moulage par injection

(30) Priorität: 28.07.2006 DE 102006036139
(43) Veröffentlichungstag der Anmeldung: 30.01.2008
(73) Patentinhaber: Prettl, Rolf, 72072 Tübingen (DE)
(72) Erfinder: Dettinger, Jürgen, 72669 Unterensingen (DE); Borst, Peter, 88527 Unlingen (DE)
(74) Vertreter: Steil, Christian

(56) Entgegenhaltungen:
- DE-A1- 3 616 649
- DE-B1- 1 540 461
- JP-A- 11 345 521
- US-A- 4 882 116
- US-A- 5 073 326

## Beschreibung

Die Erfindung betrifft eine Spritzgießanordnung zum Anspritzen eines Formteils, insbesondere einer Tülle, an ein Kabel, mit mindestens zwei Spritzgießwerkzeugen, die in einer Halteeinrichtung entlang einer Längserstreckung eines in der Spritzgießanordnung befindlichen Kabels zueinander versetzt angeordnet sind und beim Spritzgießvorgang das Kabel zumindest abschnittsweise umschließen, wobei die Spritzgießwerkzeuge ein erstes Werkzeugteil und ein zweites Werkzeugteil aufweisen, und wobei die Halteeinrichtung ein erstes Halteteil, an dem die ersten Werkzeugteile angeordnet sind, und ein zweites Halteteil aufweist, an dem die zweiten Werkzeugteile angeordnet sind. Die Erfindung betrifft ferner ein Verfahren zum Anspritzen eines Formteils und eine Verwendung einer Spritzgießanordnung zur Fertigung oder Bearbeitung von Kabeln.

Eine solche Spritzgießanordnung, ein solches Verfahren und eine solche Verwendung einer Spritzgießanordnung sind aus der DE 1 540 461 bekannt.

Durch die Zunahme der Funktionsvielfalt von technischen Vorrichtungen, besteht regelmäßig die Notwendigkeit, Signale zwischen verschiedenen Baugruppen zu übertragen. Trotz der vorhandenen Möglichkeiten einer kabellosen Übertragung ist die kabelgebundene Übertragung gerade hinsichtlich der Zuverlässigkeit und der Fehlersicherheit bei vielen Anwendungen immer noch das Mittel der Wahl.

Werden viele elektrische Verbindungen benötigt, so ist das Verlegen einzelner Kabel sehr zeitaufwändig. Es ist daher oftmals üblich, mehrere einzelne Kabel zu einem Kabelsatz oder Kabelbaum vorzukonfektionieren. Die Verwendung von Kabelbäumen ist dabei insbesondere im Bereich der Kraftfahrzeugfertigung bekannt.

Um den Kabelbaum oder Teile des Kabelbaums in einer technischen Vorrichtung zu fixieren, ist es bekannt, Teile des Kabelbaums mit Formteilen zu versehen, bei denen es sich insbesondere um Tüllen handelt. Diese Tüllen dienen der Führung, der Befestigung und dem Schutz des Kabelbaums.

Die benötigten Tüllen werden hergestellt, insbesondere als Einzelteil gespritzt, und auf den jeweiligen Teil des Kabelbaums oder ein einzelnes Kabel aufgezogen. Es handelt sich dabei um einen aufwändigen Prozess, bei dem es erforderlich sein kann, viele Tüllen aus einer Auswahl von verschiedenen Tüllentypen auf das Kabel aufzuziehen.

Dabei ist es zum einen von Nachteil, dass die benötigten Anlagen bzw. Vorrichtungen nur für einen Tüllentyp ausgelegt sind und nur mit Aufwand für andere Typen umgebaut werden können. Außerdem können die Tüllen, da sie aufgeschoben sind, in ihrer Position verrutschen und müssen daher teilweise mit dem Kabel verklebt werden. Daher ist das Fertigen eines Kabelbaums mit den entsprechenden Tüllen ein relativ aufwändiger und kostenintensiver Prozess.

In dieser Hinsicht ist es aus der DE 35 44 888 A1 bekannt, ein Kabel mit einem Außenmantel zu versehen. Dazu wird das Kabel durch eine Verengung geführt, an der eine Kunststoffschmelze, die den späteren Außenmantel bildet, unter Überdruck aufgebracht wird. Um den aufgebrachten Außenmantel zur Erstarrung zu bringen, wird das nunmehr ummantelte Kabel unter Überdruck in einem Druckkühlrohr abgekühlt. Einen Hinweis zum Fertigen von Formteilen gibt es hier aber nicht.

Eine Vorrichtung zum Konfektionieren von Kabeln ist aus der eingangs genannten DE 1 540 461 bekannt. Aus der D1 ist eine Kabelbaumschablone bekannt, mit Hilfe derer ein Kabelbaum mit angespritzten Steckern, Verbindungsringen, Halterungen etc. unter Verwendung einer Spritzeinrichtung hergestellt werden kann. Dazu wird ein Kabel in die Kabelbaumschablone eingelegt, die Kabelbaumschablone geschlossen und dann mittels Spritzeinheiten Kunststoffe in die Hohlräume der Kabelbaumschablone gespritzt.

Aus der US 5,073,326 eine Vorrichtung und ein Verfahren zum Spritzgießen bekannt, die es ermöglichen Spritzgussteile herzustellen, bei denen sich weitere Bestandteile, insbesondere metallische Steckkontakte, unter der Oberfläche befinden.

Vor diesem Hintergrund ist es eine Aufgabe der vorliegenden Erfindung, eine kostengünstige Vorrichtung und ein Verfahren, sowie eine Verwendung einer Spritzgießanordnung zum Befestigen eines Formteils, insbesondere einer Tülle, an einem Kabel aufzuzeigen. Insbesondere soll es mit geringem Aufwand möglich sein, mehrere Tüllen mit verschiedenen Formen und/oder an verschiedenen Stellen entlang des Kabels anzuordnen und variieren zu können.

Diese Aufgabe wird nach einem Aspekt der Erfindung mit einer eingangs genannten Spritzgießanordnung dadurch gelöst, dass das erste Werkzeugteil und/oder das zweite Werkzeugteil verschiebbar in der Halteeinrichtung gehalten ist. Weitere Aspekte ergeben sich im Hinblick auf das entsprechende Verfahren und die entsprechende Verwendung.

Die Aufgabe der Erfindung wird außerdem mit einem Verfahren zum Anspritzen eines Formteils, insbesondere einer Tülle, an ein Kabel nach Anspruch 8 gelöst.

Die Aufgabe der Erfindung wird schließlich auch gelöst mit einer Verwendung einer zuvor beschriebenen Spritzgießanordnung zum Anspritzen eines Formteils, insbesondere einer Tülle, an ein Kabel.

Die Tüllen werden unmittelbar auf das zu konfektionierende Kabel aufgespritzt. Dies vereinfacht den Herstellungsprozess bereits erheblich, da die Tüllen nicht mehr separat gefertigt werden müssen und die Befestigung der Tüllen an dem Kabel durch den Spritzgießvorgang sichergestellt werden kann.

Des Weiteren können mittels der zwei Spritzgießwerkzeuge jeweils zwei Tüllen im Wesentlichen gleichzeitig an das Kabel angespritzt werden. Selbst wenn die Spritzgießwerkzeuge nacheinander mit Spritzgussmasse befüllt werden, verbleibt immer noch der Vorteil, dass das Kabel nicht nach der Fertigung der ersten Tülle entnommen werden muss.

Zur Fertigung weiterer Tüllen an diesem Kabel, kann das Kabel an einer unterschiedlichen Position in die Spritzgießanordnung oder in eine weitere Spritzgießanordnung mit einer anderen Konfiguration von Spritzgießwerkzeugen eingelegt werden. Selbstverständlich ist es auch möglich, die Spritzgießwerkzeuge so auszubilden, dass die gewünschten Formteile im Wesentlichen gleichzeitig an mehreren Kabeln angespritzt werden. So ist es bspw. denkbar, die Spritzgießanordnung mit mindestens zwei Gruppen von Spritzgießwerkzeugen zu versehen, wobei dann jeweils eine Gruppe einem von mehreren zu konfektionierenden Kabeln zugeordnet sein kann.

Dadurch, dass zwei Tüllen im Wesentlichen gleichzeitig - oder bei Bedarf auch nacheinander - an ein Kabel angespritzt werden können, kann die Konfektionierung eines Kabels bzw. eines Kabelbaums einfacher gestaltet und beschleunigt werden. Es lässt sich eine Verringerung der Produktionskosten realisieren.

Die Werkzeugteile können in einer geöffneten Stellung zueinander positioniert werden, in der das Kabel in die Spritzgießwerkzeuge eingelegt wird oder das Kabel mit den angespritzten Formteilen aus dem Spritzgießwerkzeug entnommen wird, und in einer geschlossenen Stellung positioniert werden, in der der Spritzgießvorgang stattfindet. Die Werkzeugteile werden dabei entlang einer im Wesentlichen linearen Strecke aufeinander zu bewegt.

Die Halteteile ermöglichen eine besonders einfache Handhabung und Führung der ersten und zweiten Werkzeugteile. Werden das erste und das zweite Halteteil aufeinander zu bewegt, so bewegen sich auch die ersten und zweiten Werkzeugteile aufeinander zu.

Dadurch, dass das erste Werkzeugteil und/oder das zweite Werkzeugteil verschiebbar in der Halteeinrichtung gehalten ist, wird es ermöglicht, Tüllen an verschiedenen Positionen entlang des Kabels anzuspritzen.

Dass das erste Werkzeugteil verschiebbar gehalten ist, lässt sich vorzugsweise durch ein Führungssystem, insbesondere ein Schienensystem, erzielen. Das erste Werkzeugteil kann dann entlang des Schienensystems gleiten und in verschiedene Positionen gebracht werden. Das Schienensystem kann insbesondere auf einfache Weise mittels eines Vorsprungs oder einer Nut und einem jeweils entsprechenden Gegenelement realisiert werden.

Damit ist die oben genannte Aufgabe vollständig gelöst.

In einer Ausgestaltung der Erfindung weist das erste Werkzeugteil ein Grundelement und einen am oder im Grundelement angeordneten Formungseinsatz auf.

Bei dieser Ausführungsform können auf einfache Weise verschiedene Tüllentypen gefertigt werden, indem für den jeweils gewünschten Tüllentyp ein entsprechender Formungseinsatz in das Grundelement eingesetzt wird. Grundsätzlich ist es natürlich auch denkbar, das zweite Werkzeugteil als zweiteiligen Aufbau mit einem Grundelement und einem Formungseinsatz auszugestalten.

In einer weiteren Ausgestaltung der Erfindung ist das erste Werkzeugteil und/oder das zweite Werkzeugteil lösbar und/oder verdrehbar in der Halteeinrichtung gehalten. Soll das erste Werkzeugteil lediglich lösbar in der Halteeinrichtung gehalten sein, so weist die Halteeinrichtung vorzugsweise Aufnahmen auf, an denen das Werkzeugteil fixiert wird. An den Aufnahmen können dann erste Werkzeugteile für verschiedene Tüllentypen angeordnet werden.

Wenn eine Verdrehbarkeit gewünscht ist, beispielsweise, um eine Tülle in zwei verschiedenen Ausrichtungen auf ein Kabel aufbringen zu können, so kann dies zum Beispiel mittels einer drehbaren Aufnahme bewirkt werden, oder aber mittels einer Aufnahme, die es erlaubt, das Werkzeugteil auch um 180° verdreht einzusetzen.

Selbstverständlich kann die Halteeinrichtung auch so ausgebildet sein, dass mehrere Freiheitsgrade, insbesondere sowohl ein Verschieben als auch ein Lösen des ersten Werkzeugteils, ermöglicht werden. Eine Ausführungsform, um Werkzeugteile für verschiedene Tüllentypen variabel in der Halteeinrichtung anzuordnen, wird in einem Ausführungsbeispiel später erläutert.

Dadurch, dass das erste Werkzeugteil und/oder das zweite Werkzeugteil lösbar und/oder verdrehbar in der Halteeinrichtung gehalten ist, wird es ermöglicht, Tüllen verschiedener Arten an verschiedenen Positionen entlang des Kabels anzuspritzen.

In einer weiteren Ausgestaltung der Erfindung ist mindestens einem Spritzgießwerkzeug ein Klemmelement zum Fixieren eines in der Spritzgießanordnung befindlichen Kabels während des Spritzgießvorgangs zugeordnet.

Dabei kann das Klemmelement einstückig mit dem Spritzgießwerkzeug oder getrennt von dem Spritzgießwerkzeug ausgebildet sein. Das Klemmelement kann zusätzlich oder alternativ die Funktion erfüllen, das Spritzgusswerkzeug gegenüber dem eingelegten Kabel abzudichten, um ein Austreten von Spritzgussmasse aus dem Spritzgusswerkzeug zu vermeiden.

In einer weiteren Ausgestaltung der Erfindung weist zumindest ein Spritzgießwerkzeug ein Codierelement auf, das mit einem Codiergegenelement zusammenwirken kann.

Das Codierelement ermöglicht es, verschiedene Spritzgießwerkzeuge, insbesondere solche Spritzgießwerkzeuge, die unterschiedliche Tüllentypen ausbilden, zu unterscheiden. Das Codierelement kann auf viele verschiedene Weisen realisiert werden: Beispielsweise in einer mechanischen Variante, insbesondere durch einen oder mehrere Vorsprünge und/oder Ausnehmungen, oder in einer elektrischen Variante, insbesondere durch einen zugeordneten Widerstand, oder auch in einer elektronischen Variante, insbesondere mittels einer Schaltung, die das Auslesen einer Identifikation ermöglicht.

Die Besonderheit des Codierelements lässt sich besonders gut verdeutlichen, wenn man ein entsprechendes Codiergegenelement berücksichtigt, das mit dem Codierelement zusammenwirken kann. Dabei repräsentiert das Codiergegenelement eine gewünschte Anordnung bestimmter Spritzgießwerkzeuge an bestimmten Stellen entlang des Kabels. So kann das Codiergegenelement bspw. beschreiben, dass ein Spritzgießwerkzeug eines ersten Typs an einer ersten Position erwartet wird und ein Spritzgießwerkzeug eines zweiten Typs an einer zweiten Position.

Wird eine Übereinstimmung zwischen dem Codierelement des Spritzgießwerkzeugs und dem Codiergegenelement festgestellt, so zeigt dies an, dass das richtige Spritzgießwerkzeug sich an der richtigen Position befindet. Kann eine Überstimmung nicht festgestellt werden, so bedeutet dies, dass entweder das falsche Spritzgießwerkzeug eingesetzt wurde und/oder das Spritzgießwerkzeug sich an einer falschen Position befindet.

Bevorzugt ist das Codiergegenelement als eine Codierschiene ausgeführt, die mit einer oder mehrerer Vorsprünge und/oder Ausnehmungen gewissermaßen das negativ zu dem Codierelement darstellt. Das richtige Spritzgießwerkzeug an der richtigen Position ist dann gegeben, wenn der Vorsprung und/oder die Ausnehmung bzw. die Vorsprünge und/oder Ausnehmungen passend ineinander greifen. Im Ausführungsbeispiel wird später erläutert, wie die richtige Position für mehrere bestimmte Spritzgießwerkzeuge vorgegeben werden kann.

In einer weiteren Ausgestaltung der Erfindung ist mindestens ein Spritzgießwerkzeug zum Umspritzen eines Endes eines in der Spritzgießanordnung befindlichen Kabels zur Ausbildung eines Steckers ausgebildet.

Dadurch kann der gesamte Prozess der Kabelkonfektionierung noch weiter vereinfacht werden und können die Herstellungskosten weiter reduziert werden.

In einer weiteren Ausgestaltung der Erfindung weist mindestens ein Spritzgießwerkzeug eine Ausnehmung für den Eingriff einer Auswerfvorrichtung auf.

Auf diese Weise kann das Entfernen des Kabels mit den angespritzten Formteilen aus dem Spritzgießwerkzeug vereinfacht werden, da die Auswerfvorrichtung die zugeordnete Tülle mit dem Kabel herausdrücken kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch die Patentansprüche festgelegten Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:
- Fig. 1: eine Spritzgießmaschine mit einer erfindungsgemäßen Spritzgießanordnung;
- Fig. 2: drei Spritzgießwerkzeuge mit einem Codiergegenelement an einem Halteteil;
- Fig. 3: die Spritzgießwerkzeuge gemäß Fig. 2 in einer anderen Konfiguration mit einem anderen Codiergegenelement und zwischen zwei Halteteilen gehalten;
- Fig. 4: eine schematische Darstellung der Spritzgießwerkzeuge und zweier angespritzter Tüllen; und
- Fig. 5: einen Querschnitt durch ein Spritzgießwerkzeug mit einer zugeordneten Einspritzvorrichtung.

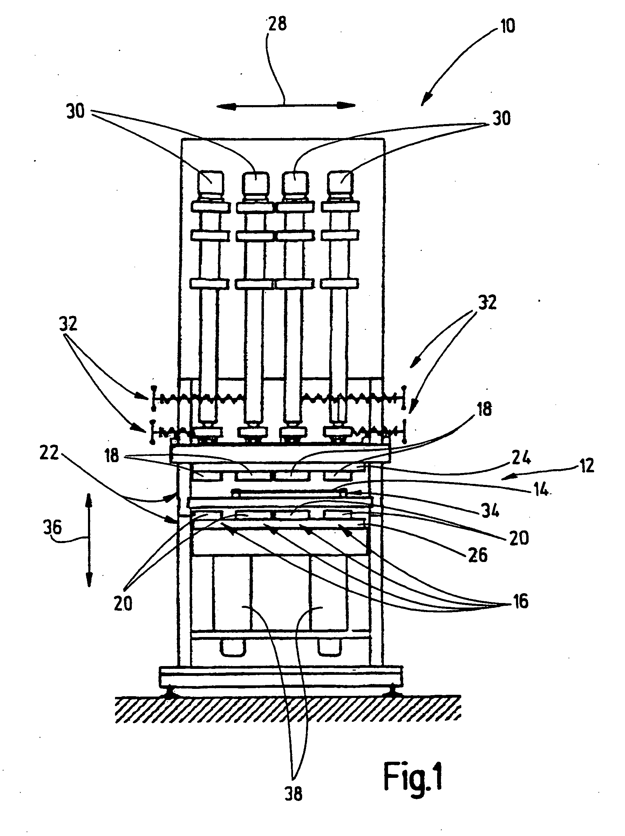

Fig. 1 zeigt eine Spritzgießmaschine 10 mit einer Spritzgießanordnung 12 zum Anspritzen eines Formteils, insbesondere einer Tülle, an ein Kabel 14.

Die Spritzgießanordnung 12 weist bei dieser Ausführungsform vier Spritzgießwerkzeuge 16 auf, die jeweils aus einem oberen, ersten Werkzeugteil 18 und einem unteren, zweiten Werkzeugteil 20 gebildet sind. Die Spritzgießwerkzeuge 16 sind in einer Halteeinrichtung 22 angeordnet, die ein oberes, erstes Halteteil 24 und ein unteres, zweites Halteteil 26 aufweist.

Die Spritzgießwerkzeuge 16 sind in der Halteeinrichtung 22 so angeordnet, dass sie entlang einer mittels des Doppelpfeils angedeuteten Längserstreckung 28 des in der Spritzgießanordnung 12 befindlichen Kabels 14 zueinander versetzt sind.

Jedem Spritzgießwerkzeug 16 ist eine Einspritzvorrichtung 30 zugeordnet, deren Positionen entlang der Längserstreckung 28 mittels Stellelementen 32 eingestellt werden können. Mittels der Einspritzvorrichtungen 30 wird eine Spritzgussmasse in die Spritzgießwerkzeuge 16 eingespritzt. Dabei kann die Spritzgussmasse wahlweise in alle Spritzgießwerkzeuge 16 oder aber in ausgewählte Spritzgießwerkzeuge 16 eingespritzt werden. Grundsätzlich ist es natürlich auch denkbar, eine Einspritzvorrichtung dafür zu verwenden, um die Spritzgussmasse nacheinander in zwei oder mehr Spritzgießwerkzeuge 16 einzuspritzen.

Es sei dabei darauf hingewiesen, dass im hier gezeigten Beispiel die zwei mittleren Spritzgießwerkzeuge 16 dafür ausgebildet sind, Tüllen an das Kabel 14 anzuspritzen und dass mit dem Spritzgießwerkzeug 16 an der rechten Seite ein Stecker am Ende 34 des Kabels 14 ausgebildet wird.

Zum Anspritzen der Formteile an das Kabel 14 werden folgende Schritte durchgeführt. Dabei wird zunächst das Kabel 14 in die Spritzgießanordnung 12 eingebracht, und zwar zwischen die ersten und zweiten Werkzeugteile 18, 20 der Spritzgießwerkzeuge 16. Das Kabel 14 kann sowohl manuell eingelegt werden als auch maschinell zugeführt werden.

Wenn sich das Kabel 14 in der Spritzgießanordnung 12 befindet, werden die ersten und zweiten Werkzeugteile 18, 20 aufeinander zu bewegt, indem die ersten und zweiten Halteteile 24, 26 entlang einer Vertikalrichtung 36 aufeinander zufahren. Bei der hier gezeigten Ausführungsform verbleibt das erste Halteteil 24 an seiner Position, und das zweite Halteteil 26 wird von zwei Hubeinrichtungen 38 in der Vertikalrichtung 36 nach oben gefahren. Selbstverständlich ist es auch möglich, gleichzeitig das erste Halteteil 24 nach unten zu fahren oder aber das erste Werkzeugteil 18 abwärts zu bewegen, während das zweite Halteteil 26 seine Position beibehält.

Die Bewegung des ersten und des zweiten Halteteils 24, 26 aufeinander zu führt schließlich dazu, dass das Kabel 14 in mehreren Teilbereichen von den Spritzgießwerkzeugen 16 umschlossen ist. Aufgrund der Form der ersten und zweiten Werkzeugteile 18, 20, die nachfolgend noch näher gezeigt wird, bilden sich Kavitäten um das Kabel 14. Die Kavitäten entsprechen in ihrer Form dem jeweiligen Formteil (hier: Tülle oder Stecker), das an das Kabel 14 angespritzt werden soll.

Mittels der Einspritzvorrichtungen 30 wird dann eine Spritzgussmasse in die Kavitäten eingefüllt. Nachdem die Spritzgussmasse eine ausreichende Festigkeit erreicht hat, werden die ersten und zweiten Werkzeugteile 18, 20 wieder auseinandergefahren, und das Kabel 14 mit den angespritzten Formteilen kann entweder manuell oder maschinell entnommen werden. Das Entnehmen des Kabels 14 kann mittels einer Auswerfvorrichtung unterstützt werden.

Auf diese Weise können effizient verschiedene Formteile an ein Kabel 14 angespritzt werden. Grundsätzlich ist es auch möglich, ein Kabel 14, welches bereits mit einigen Formteilen versehen wurde, wieder in die Spritzgießanordnung 12 einzubringen; dann bspw. in einer anderen Position, um an anderen Stellen des Kabels Formteile anzuspritzen.

Außerdem können die Spritzgießwerkzeuge 16 ausgetauscht oder versetzt werden, so dass verschiedene Formteile, insbesondere verschiedene Tüllentypen, an ausgewählten Stellen des Kabels 14 angespritzt werden können.

Dadurch zeigt die erfindungsgemäße Spritzgießanordnung 12 mit verhältnismäßig einfachen Mitteln eine Möglichkeit auf, Kabel 14 mit Formteilen, insbesondere auch mit komplex geformten Tüllen, zu versehen.

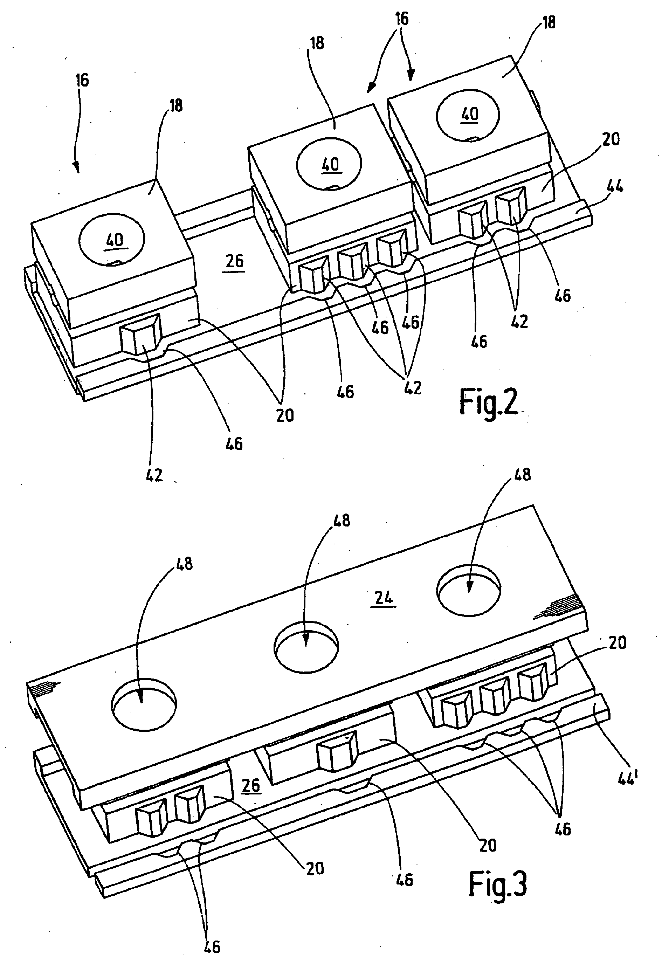

Fig. 2 zeigt eine Anordnung von drei Spritzgießwerkzeugen 16, deren jeweils zweiten Werkzeugteile 20 an einem zweiten Halteteil 26 angeordnet sind. Die ersten Werkzeugteile 18 weisen hier jeweils in etwa kegelförmige Ausnehmungen 40 auf, die der Aufnahme einer Düse, insbesondere einer Heißkanal-Düse, zum Einspritzen der Spritzgussmasse dienen. Die Spritzgießwerkzeuge 16 können vom zweiten Halteteil 26 gelöst werden, um so ein Einsetzen verschiedener Spritzgießwerkzeuge 16 zu ermöglichen.

Grundsätzlich ist es auch möglich, die Spritzgießwerkzeuge 16 an verschiedenen Stellen des zweiten Halteteils 26 einzusetzen und/oder die Spritzgießwerkzeuge 16 im zweiten Halteteil 26 zu verschieben.

Für den Produktionsprozess, der in der Regel bestimmte Tüllentypen an bestimmten Positionen anspritzen soll, kann es jedoch wünschenswert sein, bestimmte Anordnungen vorzugeben.

Um eine bestimmte Art des Spritzgießwerkzeugs 16 einer bestimmten Stelle entlang des zweiten Halteteils 26 zuordnen zu können, sind die zweiten Werkzeugteile 20 mit einem oder mehreren Codierelementen 42 versehen. Die Codierelemente 42 sind hier als Vorsprünge ausgebildet, und eine bestimmte Kombination von Codierelementen 42 wird einem bestimmten Typ des Spritzgießwerkzeugs 16 zugeordnet.

So wird bspw. hier ein erstes Spritzgießwerkzeug 16 (links), welches zur Formung eines ersten Tüllentyps ausgebildet ist, mit einem breiten Vorsprung gekennzeichnet. Ein zweites Spritzgießwerkzeug 16 (Mitte), welches einen zweiten Tüllentyp ausbildet, mit drei schmalen Vorsprüngen gekennzeichnet, die jeweils in einem ersten Abstand zueinander beabstandet sind. Ein drittes Spritzgießwerkzeug 16 (rechts), das zur Formung eines dritten Tüllentyps ausgebildet ist, ist mit zwei schmalen Vorsprüngen, die in einem zweiten Abstand zueinander beabstandet sind, gekennzeichnet. Selbstverständlich kann eine solche Codierung auch an den ersten Werkzeugteilen 18 vorgenommen werden.

Um die richtige Auswahl und die richtige Positionierung der Spritzgießwerkzeuge 16 zu überprüfen oder gewährleisten zu können, wirken die Codierelemente 42 mit einem stabförmigen Element 44 zusammen, das eine Mehrzahl von Codiergegenelementen 46 aufweist, die hier als Ausnehmungen ausgebildet sind. In der hier gezeigten Ausführungsform weist das Codiergegenelement 46 Ausnehmungen auf, die so positioniert sind, dass bei einem Eingreifen der Codierelemente 42 in die Codiergegenelemente 46 die richtige Auswahl und die richtige Position der Spritzgießwerkzeuge 16 gegeben ist.

Kann das stabförmige Element 44 mit den Codiergegenelementen 46 nicht passend am zweiten Halteteil 26 angeordnet werden, so weist dies darauf hin, dass ein falsches Spritzgießwerkzeug 16 eingesetzt wurde und/oder sich ein Spritzgießwerkzeug 16 an einer falschen Position befindet.

Mittels der Codierelemente 42 und der entsprechenden Codiergegenelemente 46 kann die Spritzgießanordnung 12 schnell umkonfiguriert werden und kann die korrekte Konfiguration der Spritzgießanordnung 12 überprüft werden.

Fig. 3 entspricht im Wesentlichen der Fig. 2, wobei nun aber ein anderes stabförmiges Element 44' mit anders angeordneten Codiergegenelementen 46 gezeigt ist und außerdem ein erstes Halteteil 24 dargestellt ist.

Das erste Halteteil 24 weist drei Öffnungen 48 auf, durch die die Düse zum Einspritzen der Spritzgussmasse geführt werden kann. Die Spritzgießwerkzeuge 16 befinden sich nun in einer weiteren Konfiguration, wodurch eine andere Anordnung von Tüllen an das Kabel 14 angespritzt werden kann. Die korrekte Auswahl und korrekte Positionierung der Spritzgießwerkzeuge 16 wird auch hier wieder durch die Codierelemente 42 und die entsprechenden Codiergegenelemente 46 im stabförmigen Element 44' sichergestellt.

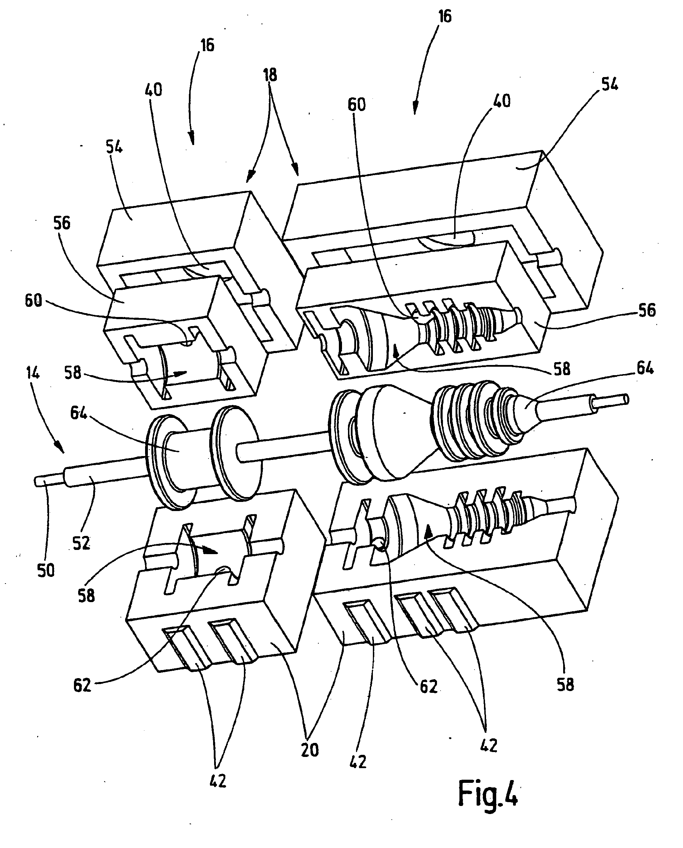

Fig. 4 zeigt schematisch das Zusammenspiel zwischen den einzelnen Elementen der Spritzgießanordnung 12 in Bezug auf das Kabel 14, welches hier mit einer einfachen Seele 50 und einer Ummantelung 52 dargestellt ist.

Es sind zwei Spritzgießwerkzeuge 16 gezeigt, die zum Anspritzen von zwei verschiedenen Tüllentypen ausgebildet sind. Die Spritzgießwerkzeuge 16 weisen jeweils ein erstes Werkzeugteil 18 und ein zweites Werkzeugteil 20 auf. Die ersten Werkzeugteile 18 sind der besseren Übersichtlichkeit halber um etwa 90° verkippt dargestellt.

Die ersten Werkzeugteile 18 weisen jeweils ein Grundelement 54 und einen Formungseinsatz 56 auf, der lösbar in das Grundelement 54 eingesetzt werden kann. In den Formungseinsätzen 56 und in den zweiten Werkzeugteilen 20 sind Ausnehmungen zu erkennen, die vor dem Spritzvorgang Kavitäten 58 um das eingelegte Kabel 14 herum bilden. In den Formungseinsätzen 56 sind Löcher 60 zu erkennen, die Teil der kegelförmigen Ausnehmungen 40 sind und das Befüllen der Kavitäten 58 mit Spritzgussmasse ermöglichen.

Bei den zweiten Werkzeugteilen 20 sind Ausnehmungen 62 gezeigt, in die jeweils eine Auswerfvorrichtung eingreift. Wenn das Kabel 14 mit den Formteilen 64, die hier als Tüllen ausgestaltet sind, ausgeworfen werden soll, drückt jeweils ein Dorn der Auswerfvorrichtung 62 von unten gegen das jeweilige Formteil 64 und schiebt es aus der jeweiligen Kavität 58.

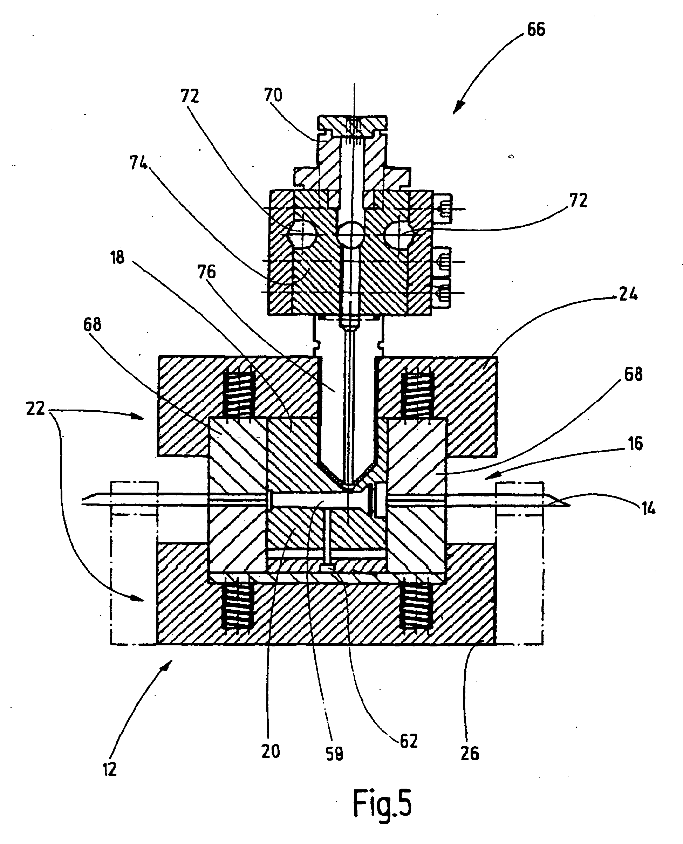

Fig. 5 zeigt einen Teil eines weiteren Ausführungsbeispiels in einer Schnittdarstellung. Es sind ein Spritzgießwerkzeug 16, eine Halteeinrichtung 22 und ein Einspritzkopf 66 dargestellt.

Dem Spritzgießwerkzeug 16 sind zwei Klemmelemente 68 zugeordnet, die einerseits das Kabel 14 während des Spritzgießvorgangs festklemmen und andererseits Abschlüsse der Kavität 58 entlang der Längserstreckung des Kabels 14 bilden. Die Klemmelemente 68 sind hier als Kabelklemmleisten ausgeführt.

Die Einspritzkopf 66 weist eine Angussbuchse 70, eine Heizpatrone 72, einen Heißkanalverteiler 74 und eine Heißkanal-Düse 76 auf.

Beim Spritzgießvorgang wird die Spritzgussmasse von der Heizpatrone 72 erhitzt und durch die Heißkanal-Düse 76 in die Kavität 58 gepresst. Dadurch wird das zwischen dem ersten Werkzeugteil 18 und dem zweiten Werkzeugteil 20 befindliche Kabel von der Spritzgussmasse umschlossen und das gewünschte Formteil ausgebildet.

Die gezeigte Spritzgießanordnung zeigt eine kostengünstige Möglichkeit auf, ein Kabel mit Formteilen, insbesondere mit Tüllen, zu versehen. Des Weiteren ermöglicht die Erfindung eine variable Anordnung bezüglich der Position und Art der Spritzgusswerkzeuge, so dass eine große Anzahl verschiedener Anordnungen von Formteilen mittels der Spritzgießanordnung realisiert werden können. Des Weiteren ergibt sich unter Verwendung der Codierelemente und entsprechender Codiergegenelemente die Möglichkeit, Änderungen der Konfiguration der Spritzgießwerkzeuge schnell vorzunehmen und die korrekte Positionierung sowie Auswahl der Spritzgießwerkzeuge zu kontrollieren.

## Patentansprüche

1. Spritzgießanordnung (12) zum Anspritzen eines Formteils (64), insbesondere einer Tülle, an ein Kabel (14), mit mindestens zwei Spritzgießwerkzeugen (16), die in einer Halteeinrichtung (22) entlang einer Längserstreckung (28) eines in der Spritzgießanordnung (12) befindlichen Kabels (14) zueinander versetzt angeordnet sind und beim Spritzgießvorgang das Kabel (14) zumindest abschnittsweise umschließen, wobei die Spritzgießwerkzeuge (16) ein erstes Werkzeugteil (18) und ein zweites Werkzeugteil (20) aufweisen und wobei die Halteeinrichtung (22) ein erstes Halteteil (24), an dem die ersten Werkzeugteile (18) angeordnet sind, und ein zweites Halteteil (26) aufweist, an dem die zweiten Werkzeugteile (20) angeordnet sind, **dadurch gekennzeichnet, dass** das erste Werkzeugteil (18) und/oder das zweite Werkzeugteil (20) verschiebbar in der Halteeinrichtung (22) gehalten ist.

2. Spritzgießanordnung (12) nach Anspruch 1, wobei das erste Werkzeugteil (18) ein Grundelement (54) und einen am oder im Grundelement (54) angeordneten Formungseinsatz (56) aufweist.

3. Spritzgießanordnung (12) nach Anspruch 1 oder 2, wobei das erste Werkzeugteil (18) und/oder das zweite Werkzeugteil (20) lösbar und/oder verdrehbar in der Halteeinrichtung (22) gehalten ist.

4. Spritzgießanordnung (12) nach einem der Ansprüche 1 bis 3, wobei mindestens einem Spritzgießwerkzeug (16) ein Klemmelement zum Fixieren eines in der Spritzgießanordnung (12) befindlichen Kabels (14) während des Spritzgießvorgangs zugeordnet ist.

5. Spritzgießanordnung (12) nach einem der Ansprüche 1 bis 4, wobei zumindest ein Spritzgießwerkzeug (16) ein Codierelement (42) aufweist, das mit einem Codiergegenelement (46) zusammenwirken kann.

6. Spritzgießanordnung (12) nach einem der Ansprüche 1 bis 5, wobei mindestens ein Spritzgießwerkzeug (16) zum Umspritzen eines Endes (34) eines in der Spritzgießanordnung (12) befindlichen Kabels (14) zur Ausbildung eines Steckers ausgebildet ist.

7. Spritzgießanordnung (12) nach einem der Ansprüche 1 bis 6, wobei mindestens ein Spritzgießwerkzeug (16) eine Ausnehmung (62) für den Eingriff einer Auswerfvorrichtung aufweist.

8. Verfahren zum Anspritzen eines Formteils (64), insbesondere einer Tülle, an ein Kabel (14), mit den folgenden Schritten:
- Einbringen mindestens eines Kabels (14) in mindestens zwei Spritzgießwerkzeuge (16),
- Umschließen des Kabels (14) in mindestens zwei Teilbereichen des Kabels (14) mittels der Spritzgießwerkzeuge (16), so dass die Spritzgießwerkzeuge (16) mindestens zwei Kavitäten (58) um das Kabel (14) bilden, und
- zumindest teilweises Befüllen der Kavitäten (58) mit einer Spritzgussmasse, wobei die Spritzgießwerkzeuge (16) ein erstes. Werkzeugteil (18) und ein zweites Werkzeugteil (20) aufweisen und wobei eine Halteeinrichtung (22) ein erstes Halteteil (24), an dem die ersten Werkzeugteile (18) angeordnet sind, und ein zweites Halteteil (26) aufweist, an dem die zweiten Werkzeugteile (20) angeordnet sind,
**dadurch gekennzeichnet, dass** das erste und/oder das zweite Werkzeugteil (18, 20) der Spritzgießwerkzeuge (16) verschiebbar in der Halteeinrichtung (22) gehalten ist.

9. Verfahren nach Anspruch 8, wobei vor dem Umschließen des Kabels (14) ausgewählte Spritzgießwerkzeuge (16) in der Spritzgießanordnung (12) angeordnet werden und/oder die Spritzgießwerkzeuge (16) an ausgewählten Stellen der Spritzgießanordnung (12) positioniert werden.

10. Verwendung einer Spritzgießanordnung (12) nach einem der Ansprüche 1 bis 7 zum Anspritzen eines Formteils (64), insbesondere einer Tülle, an ein Kabel (14).

## Claims

1. Arrangement (12) for injection molding for injecting a molded part (64), in particular a sleeve, to a cable (14), the arrangement with at least two injection molding tools (16) that are arranged in a holding device (22) along a longitudinal extension (28) of a cable (14) that is arranged in the arrangement (12) for injection molding, the injection molding tools displaced from one another and enclosing the cable (14) at least sectionwise during the injection molding process, wherein the injection molding tools (16) comprise a first tool part (18) and a second tool part (20) and wherein the holding device (22) comprises a first holding part (24), at which the first tool part (18) is arranged, and a second holding part (26), at which the second tool part (20) is arranged, **characterized in that** the first tool part (18) and/or the second tool part (20) are movably held in the holding device (22).

2. Arrangement (12) for injection molding according to claim 1, wherein the first tool part (18) comprises a base element (54) and a shaping insert (56) that is arranged at or in the base element (54).

3. Arrangement (12) for injection molding according to claim 1 or 2, wherein the first tool part (18) and/or the second tool part (20) are arranged in the holding device (22) in a releasable and/or rotatable manner.

4. Arrangement (12) for injection molding according to any of claims 1 to 3, wherein a clamping element for fixing a cable (14) within the arrangement (12) for injection molding during the injection molding process is associated with at least one of the injection molding tools (16).

5. Arrangement (12) for injection molding according any of claims 1 to 4, wherein at least one of the injection molding tools (16) comprises a coding element (42) that can be engaged with a coding counter element (46).

6. Arrangement (12) for injection molding according to any of claims 1 to 5, wherein at least one of the injection molding tools (16) is embodied such that an injection molding at the end (34) of a cable (14) arranged within the arrangement (12) for injection molding results in he shape of a plug.

7. Arrangement (12) for injection molding according to any of claims 1 to 6, wherein at least one of the injection molding tools (16) comprises an opening (62) for inserting an ejection device.

8. Method for injection molding a molded part (64), in particular a sleeve, to a cable (14), the method comprising the following steps:
- introducing at least one cable (14) into at least two injection molding tools (16),
- enclosing the cable (14) in at least two sections of the cable (14) using the injection molding tools (16), such that the molding tools (16) provide at least two cavities (58) around the cable (14), and
- filling the cavities (58) at least partially with an injection molding mass, wherein the injection molding tools (16) comprise a first tool part (18) and a second tool part (20) and wherein a holding device (22) comprises a first holding part (24), at which the first tool part (18) is arranged, and a second holding part (26), at which the second tool part (20) is arranged,
**characterized in that** the first and/or the second tool part (18, 20) of the injection molding tools (16) are movably held the holding device (22).

9. Method according to claim 8, wherein prior to the enclosing of the cable (14) selected injection molding tools (16) are arranged in the arrangement (12) for injection molding and/or the injection molding tools (16) are positioned at selected positions of the arrangement (12) for injection molding.

10. Use of an arrangement (12) for injection molding according to any of claims 1 to 7 for injection molding a molded part (64), in particular a sleeve, to a cable (14).

## Revendications

1. Agencement de moulage par injection (12) pour le moulage par injection d'une pièce de formage (64), notamment d'une gaine, sur un câble (14), comprenant au moins deux outils de moulage par injection (16), qui sont disposés de manière décalée l'un par rapport à l'autre dans un dispositif de fixation (22) le long d'une étendue longitudinale (28) d'un câble (14) disposé dans l'agencement de moulage par injection (12), et qui entourent au moins en partie le câble (14) lors de l'opération de moulage par injection, les outils de moulage par injection (16) présentant une première partie d'outil (18) et une deuxième partie d'outil (20) et le dispositif de fixation (22) présentant une première partie de fixation (24) sur laquelle sont disposées les premières parties d'outil (18) et une deuxième partie de fixation (26) sur laquelle sont disposées les deuxièmes parties d'outil (20), **caractérisé en ce que** la première partie d'outil (18) et/ou la deuxième partie d'outil (20) sont maintenues de manière déplaçable dans le dispositif de fixation (22).

2. Agencement de moulage par injection (12) selon la revendication 1, dans lequel la première partie d'outil (18) présente un élément de base (54) et un insert de moulage (56) disposé sur ou dans l'élément de base (54).

3. Agencement de moulage par injection (12) selon la revendication 1 ou 2, dans lequel la première partie d'outil (18) et/ou la deuxième partie d'outil (20) sont maintenues de manière amovible et/ou rotative dans le dispositif de fixation (22).

4. Agencement de moulage par injection (12) selon l'une quelconque des revendications 1 à 3, dans lequel au moins un outil de moulage par injection (16) est associé à un élément de serrage pour fixer un câble (14) disposé dans l'agencement de moulage par injection (12) pendant l'opération de moulage par injection.

5. Agencement de moulage par injection (12) selon l'une quelconque des revendications 1 à 4, dans lequel au moins un outil de moulage par injection (16) présente un élément de codage (42) qui peut coopérer avec un contre-élément de codage (46).

6. Agencement de moulage par injection (12) selon l'une quelconque des revendications 1 à 5, dans lequel au moins un élément de moulage par injection (16) est réalisé pour surmouler une extrémité (34) d'un câble (14) disposé dans l'agencement de moulage par injection (12) pour réaliser un connecteur enfichable.

7. Agencement de moulage par injection (12) selon l'une quelconque des revendications 1 à 6, dans lequel au moins un outil de moulage par injection (16) présente un évidement (62) pour l'engagement d'un dispositif d'éjection.

8. Procédé pour le moulage par injection d'une pièce de formage (64), en particulier d'une gaine, sur un câble (14), comprenant les étapes suivantes :
- insertion d'au moins un câble (14) dans au moins deux outils de moulage par injection (16),
- enveloppement du câble (14) dans au moins deux régions partielles du câble (14) au moyen des outils de moulage par injection (16), de sorte que les outils de moulage par injection (16) forment au moins deux cavités (58) autour du câble (14), et
- remplissage au moins en partie des cavités (58) avec une composition de moulage par injection, les outils de moulage par injection (16) présentant une première partie d'outil (18) et une deuxième partie d'outil (20), et un dispositif de fixation (22) présentant une première partie de fixation (24) sur laquelle sont disposées les premières parties d'outil (18), et une deuxième partie de fixation (26) sur laquelle sont disposées les deuxièmes parties d'outil (20),
**caractérisé en ce que** la première partie d'outil et/ou la deuxième partie d'outil (18, 20) des outils de moulage par injection (16) sont maintenues de manière déplaçable dans le dispositif de fixation (22).

9. Procédé selon la revendication 8, dans lequel, avant l'enveloppement du câble (14), des outils de moulage par injection sélectionnés (16) sont disposés dans l'agencement de moulage par injection (12) et/ou les outils de moulage par injection (16) sont positionnés dans des emplacements sélectionnés de l'agencement de moulage par injection (12).

10. Utilisation d'un agencement de moulage par injection (12) selon l'une quelconque des revendications 1 à 7, pour mouler par injection une pièce de formage (64), en particulier une gaine, sur un câble (14).
